(19) Europäisches Patentamt
European Patent Office
Office européen des brevets

(11) **EP 3 839 249 B1**

(12) **EUROPÄISCHE PATENTSCHRIFT**

(45) Veröffentlichungstag und Bekanntmachung des Hinweises auf die Patenterteilung:
**11.10.2023 Patentblatt 2023/41**

(21) Anmeldenummer: **20205855.8**

(22) Anmeldetag: **05.11.2020**

(51) Internationale Patentklassifikation (IPC):
**F03D 7/02** (2006.01)

(52) Gemeinsame Patentklassifikation (CPC):
**F03D 7/0224; F03D 7/0276;** F05B 2270/309;
F05B 2270/328; Y02E 10/72

(54) **VERFAHREN ZUM EINSTELLEN EINES PITCHWINKELS EINES ROTORBLATTS, STEUERUNGSVORRICHTUNG ZUM EINSTELLEN EINES PITCHWINKELS SOWIE DAZUGEHÖRIGE WINDENERGIEANLAGE**

METHOD FOR ADJUSTING A PITCH ANGLE OF A ROTOR BLADE, CONTROL DEVICE FOR ADJUSTING A PITCH ANGLE AND WIND TURBINE THEREFOR

PROCEDE DE REGLAGE DE L'ANGLE DE PAS D'UNE PALE DE ROTOR, DISPOSITIF DE COMMANDE POUR REGLER L'ANGLE DE PAS, ET EOLIENNE CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2019 DE 102019135550**

(43) Veröffentlichungstag der Anmeldung:
**23.06.2021 Patentblatt 2021/25**

(73) Patentinhaber: **Wobben Properties GmbH 26607 Aurich (DE)**

(72) Erfinder: **Schaper, Ulf 27254 Staffhorst (DE)**

(74) Vertreter: **Eisenführ Speiser Patentanwälte Rechtsanwälte PartGmbB Postfach 31 02 60 80102 München (DE)**

(56) Entgegenhaltungen:
**EP-A1- 3 109 461      EP-A2- 2 481 921
EP-B1- 2 481 921      DE-A1-102009 026 372**

• **EDUARD MULJADI ET AL: "Pitch-Controlled Variable-Speed Wind Turbine Generation", IEEE TRANSACTIONS ON INDUSTRY APPLICATIONS, IEEE SERVICE CENTER, PISCATAWAY, NJ, US, Bd. 37, Nr. 1, 1. Januar 2001 (2001-01-01) , XP011022903, ISSN: 0093-9994**

**Beschreibung**

Die Erfindung betrifft ein Verfahren zum Einstellen eines Pitchwinkels eines Rotorblatts für einen Rotor einer Windenergieanlage, eine Steuerungsvorrichtung zum Einstellen eines Pitchwinkels eines Rotorblatts für einen Rotor einer Windenergieanlage und eine Windenergieanlage.

Windenergieanlagen sind grundsätzlich bekannt, sie erzeugen elektrische Leistung aus Wind. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel ein, zwei oder mehrere gleich lange Rotorblätter. Die Rotorblätter sind schlanke Bauteile, die häufig aus faserverstärktem Kunststoff hergestellt sind.

Die Rotorblätter weisen in der Regel eine vom Wurzelbereich hin zur Rotorblattspitze sich erstreckende Rotorblattlängsachse auf. Üblicherweise sind die Rotorblätter um diese Rotorblattlängsachse rotatorisch verstellbar, um den Anstellwinkel beeinflussen zu können. Die rotatorische Verstellung der Rotorblätter um die Rotorblattlängsachse erfolgt in der Regel mittels eines sogenannten Pitchantriebs. Der Pitchantrieb ist üblicherweise in der Nabe eines Rotors, an der das Rotorblatt angeordnet ist, verortet. Der Pitchantrieb weist üblicherweise einen elektrischen Antrieb und ein Antriebsritzel auf, das mit einer Verzahnung des Rotorblatts kämmt und somit eine rotatorische Verstellung des Rotorblatts ermöglicht wird.

Übergeordnete Ziele der Einstellung des Pitchwinkels sind die Drehzahlregelung bei Nennwind und das aerodynamische Stoppen der Anlage, wobei darunter auch ein Notstop verstanden wird. Das Ziel bei der Einstellung des Pitchwinkels ist es ferner, dass sich ein derartiger Anstellwinkel einstellt, sodass weder auf der Druckseite noch auf der Saugseite des Rotorblatts eine Strömungsablösung auftritt. Trotz dieser Verstellmöglichkeiten treten häufig Strömungsablösungen, insbesondere auf der Saugseite von Rotorblättern, auf. Derartige Strömungsablösungen auf der Saugseite sind unter anderem darin begründet, dass die aerodynamischen Randbedingungen nicht statisch sind und sich diese kontinuierlich verändern, sodass eine schnelle und kontinuierliche Anpassung des Pitchwinkels erforderlich wäre. Eine derartig schnelle Einstellung des Pitchwinkels ist jedoch mit den derzeit angewendeten Regelungstechniken nicht bzw. lediglich eingeschränkt möglich. Dies führt unter anderem zu einer eingeschränkten Leistungsfähigkeit der Windenergieanlage, die insbesondere in einer nicht optimalen Umwandlung des Windes in elektrische Leistung resu ltiert.

EP 3 109 461 A1 offenbart ein Verfahren zum Betreiben einer Windkraftanlage, wobei eine Anströmleistung zur Windenergieanlage bestimmt wird, wobei anhand der Anströmleistung ein Anstellwinkel zumindest eines Rotorblatts der Windenergieanlage abgeleitet wird. Ferner werden eine Windkraftanlage, eine Steuervorrichtung, ein Computerprogrammprodukt und ein computerlesbares Medium vorgeschlagen.

Der Artikel E. Muljadi et al.: "Pitch-Controlled Variable-Speed Wind Turbine Generation", IEEE Transactions on Industry Applications, Bd. 37, Nr. 1, behandelt den Betrieb von Windkraftanlagen mit variabler Drehzahl mit Pitch-Steuerung. Das von den Autoren betrachtete System wird so gesteuert, dass es maximale Energie erzeugt und gleichzeitig die Lasten minimiert. Die Energiemaximierung wurde nur statisch durchgeführt und nur die Triebstrangbelastungen als Einschränkung berücksichtigt. Bei niedrigen bis mittleren Windgeschwindigkeiten steuern der Generator und der Stromrichter die Windkraftanlage, um maximale Energie aus dem Wind zu gewinnen. In den Regionen mit hohen Windgeschwindigkeiten wird die Windkraftanlage gesteuert, um die von der Windkraftanlage erzeugte aerodynamische Leistung aufrechtzuerhalten. Es wurden zwei Methoden zur Anpassung der aerodynamischen Leistung untersucht: die Pitchregelung und die Generatorlastregelung, die beide zur Regelung des Betriebs der Windenergieanlage eingesetzt werden. Die Analysen und Simulationen der Autoren zeigen, dass die Windkraftanlage mit ihrer optimalen Energieaufnahme betrieben werden kann, während die Belastung der Wind-Turbine für einen weiten Bereich von Windgeschwindigkeiten minimiert wird.

Es ist daher eine Aufgabe der Erfindung, ein Verfahren zum Einstellen eines Pitchwinkels eines Rotorblatts für einen Rotor einer Windenergieanlage, eine Steuerungsvorrichtung zum Einstellen eines Pitchwinkels eines Rotorblatts für einen Rotor einer Windenergieanlage und eine Windenergieanlage bereitzustellen, die einen oder mehrere der genannten Nachteile vermindern oder beseitigen. Es ist insbesondere eine Aufgabe der Erfindung, eine Lösung bereitzustellen, die einen höheren Wirkungsgrad einer Windenergieanlage, insbesondere bei geringen Luftdichten, ermöglicht.

Gemäß einem ersten Aspekt wird die eingangs genannte Aufgabe gelöst durch ein Verfahren zum Einstellen eines Pitchwinkels eines Rotorblatts für einen Rotor einer Windenergieanlage gemäß Anspruch 1.

Der Pitchwinkel beschreibt insbesondere einen Winkel zwischen einer Sehne des Rotorblatts und der Windeinfallsrichtung. Der Pitchwinkel ist üblicherweise mittels eines Pitchantriebs verstellbar. Mittels des Pitchantriebs kann das Rotorblatt um die Rotorblattlängsachse rotatorisch bewegt werden. Durch die rotatorische Bewegung des Rotors um seine Rotorblattlängsachse wird der Pitchwinkel verstellt.

Das Verfahren umfasst den Schritt einer Bestimmung der aerodynamischen Leistung des Rotors. Die aerodynamische Leistung kann beispielsweise über das Rotormoment bestimmt werden. Insbesondere ist es bevorzugt, dass die aerodynamische Leistung indirekt berücksichtigt wird. Wie im Folgenden noch näher erläutert wird, kann die aerodynamische Leistung auch aus der elektrischen Leistung bestimmt werden.

In einem weiteren Schritt umfasst das Verfahren das Ermitteln des Pitchwinkelsollwerts in Abhängigkeit von der aerodynamischen Leistung. Der Pitchwinkelsollwert ist insbesondere ein Vorgabewert für den Pitchwinkel, der unter Berücksichtigung der aerodynamischen Leistung aus aerodynamischen Gesichtspunkten im Wesentlichen optimal ist.

Das Verfahren umfasst ferner den Schritt des Einstellens des Pitchwinkels gemäß dem ermittelten Pitchwinkelsollwert. Dies bedeutet insbesondere, dass der Pitchwinkel von einem eingestellten Pitchwinkelwert hin zu dem Pitchwinkelsollwert verstellt wird. Hierfür wird vorzugsweise der Pitchantrieb angesteuert, um das Rotorblatt um seine Rotorblattlängsachse rotatorisch zu bewegen.

Der Erfindung liegt die Erkenntnis zugrunde, dass bei den bekannten Verfahren zur Steuerung des Pitchwinkels anhand der elektrischen Leistung erhebliche Verzögerungen bei der Einstellung des Pitchwinkels auftreten. Ein Grund für diese Verzögerung ist, dass die elektrische Leistung einer Windenergieanlage typischerweise in Abhängigkeit der Rotordrehzahl gewählt wird, welche allerdings aufgrund der Rotorträgheit nur verzögert ansteigt, wenn eine erhöhte aerodynamische Leistung am Rotor anliegt.

Darüber hinaus gelten die bereits im Text genannten Gründe. Verzögerungen führen beispielsweise zu einem Phasenverzug, welcher das zulässige Maß an Rückführverstärkungen begrenzt. Je langsamer beispielsweise die Leistungsregelung bei einem Drehzahlanstieg mit einer Erhöhung der Anlagenleistung reagiert, desto geringer müssen in der Regel Änderungen des Pitchwinkelsollwerts sein, damit der Regelkreis stabil bleibt und im Wesentlichen kein instabiler und/oder oszillierender Anlagenbetrieb auftritt.

Darüber hinaus resultiert ein Pitchsystem mit geringen Verstellgeschwindigkeiten dazu, dass lediglich geringe Veränderungen des Pitchwinkelsollwerts bezogen auf die Zeit möglich sind. Der Erfindung liegt ferner die Erkenntnis zugrunde, dass der Phasenverzug zwischen der elektrischen Leistung und der aerodynamischen Leistung zu einem langsam verstellbaren System führt.

Durch die Berücksichtigung der aerodynamischen Leistung anstatt der elektrischen Leistung sind steilere Pitchwinkelsollwertgradienten möglich. Steilere Pitchwinkelsollwertgradienten sind vorteilhaft, da mit solchen erst ab einer höheren ersten Grenzleistung heraus gepitcht wird, um bei einer zweiten Grenzleistung einen definierten Pitchwinkelsollwert einzustellen. Infolgedessen kann die Windenergieanlage mit steileren Pitchwinkelsollwertgradienten in einem größeren Betriebsbereich bei wirtschaftlich vorteilhaften Randbedingungen betrieben werden. Ein steilerer Pitchwinkelsollwertgradient ermöglicht es, dass die erste Grenzleistung, ab der gepitcht wird, dichter an der zweiten Grenzleistung liegt, bei der aus aerodynamischen Gründen ein Pitchwinkel erreicht sein muss. Durch eine Erhöhung der ersten Grenzleistung vergrößert sich daher der untere Leistungsbereich, in dem die WEA bei ihrem optimalen Rotorwirkungsgrad betrieben werden kann. Es besteht also ein geringerer Zeitverzug bei Nutzung der aerodynamischen Leistung gegenüber der elektrischen Leistung zur Einstellung des Pitchwinkels. Durch eine frühere Reaktion des Pitchsystems auf eine Veränderung der Windgeschwindigkeit, insbesondere auf eine Böe, wird eine stärkere Reaktion möglich, ohne Stabilitätsgrenzen der Regelung zu erreichen.

Dadurch wird eine frühere Reaktion des Pitchantriebs auf veränderte aerodynamische Randbedingungen möglich. Dies ist insbesondere bedeutend bei geringen Luftdichten und/oder turbulenten Windverhältnissen. Bei geringen Luftdichten, die typischerweise bei Bergstandorten auftreten, ist der Energiegehalt einer Luftströmung geringer als bei der gleichen Windgeschwindigkeit an einem Normalluftdichtestandort. Dies bedeutet, dass die gleiche aerodynamische Leistung an einem Niedrigluftdichtestandort erst bei einer höheren Windgeschwindigkeit verfügbar ist. Eine Erhöhung der Windgeschwindigkeit erhöht bei einem Rotorblatt den Anstellwinkel und damit auch das Risiko eines Strömungsabrisses. Dem wird üblicherweise bei Niedrigluftdichtestandorten mit einer Blattwinkelanpassung entgegengewirkt. Gerade dann wird eine stärkere Reaktion des Pitchantriebs möglich, ohne Stabilitätsgrenzen der Regelung zu erreichen. Die Erfinder haben herausgefunden, dass die Pitchwinkelsollwertgradienten mehr als verdoppelt werden können, wenn anstatt der elektrischen Leistung die aerodynamische Leistung als Grundlage zur Ermittlung des Pitchwinkelsollwerts genutzt wird.

Gemäß einer bevorzugten Fortbildung des Verfahrens ist vorgesehen, dass die aerodynamische Leistung aus einer erzeugten elektrischen Leistung, einer Verlustleistung und/oder einer Beschleunigungsleistung des Rotors ermittelt wird, wobei vorzugsweise die aerodynamische Leistung die Summe aus der elektrischen Leistung, der Verlustleistung und der Beschleunigungsleistung ist.

Die vorzugsweise mit dem Rotor erzeugte elektrische Leistung kann die an das Netz abgegebene elektrische Leistung der Windenergieanlage sein. Alternativ kann die erzeugte elektrische Leistung die am Generatorausgang zu messende elektrische Leistung sein. Die Verlustleistung kann beispielsweise durch Reibungsverluste, Übertragungsverluste und ähnliche in der Windenergie bekannte Verlustursachen begründet sein. Die Beschleunigungsleistung des Rotors ermittelt sich, wie im Folgenden noch näher erläutert wird, insbesondere durch das Trägheitsmoment des Rotors. Je nachdem, ob der Rotor hinsichtlich seiner Winkelgeschwindigkeit gerade eine negative oder eine positive Beschleunigung erfährt, ist die Beschleunigungsleistung entweder positiv oder negativ. Um die aerodynamische Leistung zu bestimmen, wird vorzugsweise die Summe aus der elektrischen Leistung, der Verlustleistung und der Beschleunigungsleistung gebildet.

Gemäß einer weiteren bevorzugten Fortbildung des Verfahrens ist vorgesehen, dass die Verlustleistung aus der Summe aus einer messbaren Verlustleistung und einer geschätzten Verlustleistung gebildet wird, wobei vorzugsweise die geschätzte Verlustleistung durch eine Multiplikation eines Schätzparameters mit der elektrischen Leistung ermittelt wird.

Ein solcher Schätzparameter entspricht einem angenommenen Wirkungsgrad. Zu nicht direkt messbaren Verlustleistungen zählen beispielsweise Schaltverluste an Halbleiterschaltelementen sowie ohmsche Verluste an Baugruppen, deren elektrischer Widerstand dem Steuerungssystem nicht bekannt ist. Über einen angenommenen Wirkungsgrad, z.B. "99.5%", kann die tatsächlich nicht messbare Verlustleistung zumindest hinreichend genau abgeschätzt werden.

In einer bevorzugten Ausführungsvariante des Verfahrens ist ferner vorgesehen, dass die Beschleunigungsleistung aus einem Trägheitsmoment des Rotors, einer Winkelgeschwindigkeit und/oder einer Winkelbeschleunigung ermittelt wird, wobei vorzugsweise die Beschleunigungsleistung durch eine Multiplikation des Trägheitsmoments des Rotors mit der Winkelgeschwindigkeit und/oder mit der Winkelbeschleunigung ermittelt wird.

Die durch Änderung des Drehimpulses im Rotor mechanisch zwischengespeicherte Beschleunigungsleistung wird hierdurch Messung der Winkelgeschwindigkeit und durch Messung der Winkelbeschleunigung erfasst, wobei die Winkelgeschwindigkeit und die Winkelbeschleunigung mit dem Trägheitsmoment des Rotors multipliziert werden.

In einer weiteren bevorzugten Fortbildung des Verfahrens ist vorgesehen, dass der Pitchwinkelsollwert aus einem Verstellgradienten gebildet wird, wobei der Verstellgradient aus dem Pitchwinkel und der aerodynamischen Leistung gebildet wird.

Der Verstellgradient beschreibt vorzugsweise, wie schnell der Pitchwinkel in Abhängigkeit von einer veränderten aerodynamischen Leistung verstellt wird. Wie im Vorherigen bereits beschrieben, ist es insbesondere bevorzugt, dass große Verstellgradienten verwendet werden, bei denen sich dennoch ein stabiler Regelkreis einstellt. Der Verstellgradient ist vorzugsweise kleiner 10°, insbesondere kleiner gleich 9°, pro Megawatt (MW). Ferner ist es bevorzugt, dass der Verstellgradient größer 3° pro Megawatt beträgt. Bei einer Anlage mit etwa 100 Metern Rotordurchmesser sind bei Standardluftdichte beispielsweise Verstellgradienten von etwa 3° pro Megawatt bevorzugt. An hochgelegenen Bergstandorten werden beispielsweise Verstellgradienten bis etwa 9° pro MW vorgesehen. Die Verstellgradienten hängen unter anderem von der aerodynamischen Auslegung der Rotorblätter ab und werden in der Regel bei größeren Anlagen niedriger ausfallen.

Der Pitchwinkelsollwert wird vorzugsweise durch eine Multiplikation des Verstellgradienten mit einer bestimmten aerodynamischen Leistung gebildet.

Gemäß der Erfindung erfolgt das Ermitteln des Pitchwinkelsollwerts auf Basis eines in einer abschnittsweise linearen Steuerfunktion abgebildeten aerodynamischen Leistungsfaktors, wobei Abschnitte der abschnittsweise linearen Steuerfunktion durch die aerodynamische Leistung definiert sind und vorzugsweise der aerodynamische Leistungsfaktor ein leistungsabhängiger Zusatzblattwinkel ist.

Eine abschnittsweise lineare Steuerfunktion beschreibt beispielsweise einen ersten linearen Abschnitt und einen zweiten linearen Abschnitt. Der erste lineare Abschnitt des Pitchwinkelsollwerts verläuft insbesondere in einem ersten Abschnitt einer aerodynamischen Leistung, beispielsweise zwischen 2000 kW und 3000 kW. Darüber hinaus ist die abschnittsweise lineare Steuerfunktion vorzugsweise für einen zweiten Abschnitt der aerodynamischen Leistung definiert, beispielsweise für eine aerodynamische Leistung zwischen 3000 und 5000 kW. Der aerodynamische Leistungsfaktor des ersten Abschnitts kann von einem aerodynamischen Leistungsfaktor des zweiten Abschnitts abweichen.

Gemäß einer weiteren bevorzugten Ausführungsvariante des Verfahrens ist vorgesehen, dass ein Mindestpitchwinkel bei dem Ermitteln des Pitchwinkelsollwerts berücksichtigt wird, wobei vorzugsweise der Mindestpitchwinkel und der aerodynamische Leistungsfaktor, insbesondere der leistungsabhängige Zusatzblattwinkel, berücksichtigt werden, wobei ferner vorzugsweise der Mindestpitchwinkel und der aerodynamische Leistungsfaktor, insbesondere der leistungsabhängige Zusatzblattwinkel, miteinander summiert werden, um den Pitchwinkelsollwert zu ermitteln.

Bei einer Windenergieanlage mit zwei oder mehr Rotorblättern wird unter dem Pitchwinkel vorzugsweise ein kollektiver Pitchwinkel verstanden. Insbesondere im Teillastbereich werden die zwei oder mehr Rotorblätter in der Regel kollektiv verstellt, sodass der Pitchwinkel an den zwei oder mehr Rotorblättern im Wesentlichen gleich ist.

Der Mindestpitchwinkel ist beispielsweise ein solcher Pitchwinkel, der bei niedrigen aerodynamischen Leistungen eingestellt wird. Insbesondere ist dies ein Pitchwinkel, der bei aerodynamischen Leistungen eingestellt wird, die unter einem ersten Leistungsschwellwert liegen.

In einer weiteren bevorzugten Fortbildung des Verfahrens ist vorgesehen, dass die abschnittsweise lineare Funktion einen ersten Abschnitt, einen zweiten Abschnitt und vorzugsweise einen dritten Abschnitt aufweist, wobei der erste Abschnitt für eine aerodynamische Leistung definiert ist, die kleiner als ein erster Leistungsschwellwert ist, wobei der Pitchwinkelsollwert im ersten Abschnitt im Wesentlichen dem Mindestpitchwinkel entspricht.

Vorzugsweise ist vorgesehen, dass der zweite Abschnitt für eine aerodynamische Leistung definiert ist, die größer gleich dem ersten Leistungsschwellwert und kleiner als ein zweiter Leistungsschwellwert ist, wobei der Pitchwinkelsollwert im zweiten Abschnitt eine Summe aus dem Mindestpitchwinkel und einem ersten aerodynamischen Leistungsfaktor beträgt, wobei vorzugsweise der erste aerodynamische Leistungsfaktor in Abhängigkeit von einem ersten Verstellgradienten, und/oder der aerodynamischen Leistung, und/oder des ersten Leistungsschwellwerts ermittelt wird.

Darüber hinaus kann es bevorzugt sein, dass der dritte Abschnitt für eine aerodynamische Leistung definiert ist, die größer gleich dem zweiten Leistungsschwellwert ist, wobei der Pitchwinkelsollwert im dritten Abschnitt eine Summe aus dem Mindestpitchwinkel und einem zweiten aerodynamischen Leistungsfaktor beträgt, wobei vorzugsweise der zweite aerodynamische Leistungsfaktor in Abhängigkeit von einem zweiten Verstellgradienten, und/oder der aerodynamischen Leistung, und/oder des zweiten Leistungsschwellwerts, und/oder des ersten Verstellgradienten, und/oder einer Differenz aus dem zweitem Leistungsschwellwert und dem ersten Leistungsschwellwert ermittelt wird.

Es ist bevorzugt, dass der erste Leistungsschwellwert zwischen 40 % und 62,5 % einer Nennleistung der Windenergieanlage, insbesondere zwischen 47,5 % und 52,5 % und besonders bevorzugt etwa 50 % beträgt. Ferner ist es bevorzugt, dass der zweite Leistungsschwellwert zwischen 62,5 % und 87,5 % der Nennleistung der Windenergieanlage, insbesondere zwischen 70 % und 80 % und besonders bevorzugt etwa 75 %, beträgt.

So ist beispielsweise für eine typische Windenergieanlage im Nennleistungsbereich von 3500 kW bis 4000 kW bevorzugt, dass der erste Leistungsschwellwert zwischen 1500 kW und 2500 kW beträgt, insbesondere bevorzugt zwischen 1900 kW und 2100 kW. Ferner ist es bevorzugt, dass der zweite Leistungsschwellwert zwischen 2500 kW und 3500 kW beträgt, insbesondere bevorzugt zwischen 2900 kW und 3100 kW.

Die Leistungsschwellwerte, ab denen die Blattwinkeleingriffe beginnen, sollten derart gewählt sein, dass sie erst in dem Windgeschwindigkeitsbereich greifen, in denen die Anlagendrehzahl nicht mehr proportional mit der Windgeschwindigkeit erhöht werden kann. Gleichzeitig müssen die Leistungsschwellwerte ausreichend niedrig gewählt werden, dass im Rahmen der regelungstechnisch stabil zu betreibenden Verstellgradienten bei hoher Anlagenleistung auch ausreichend hohe Pitchwinkel erreicht werden. Zwischen beiden gegenläufigen Zielen ist ggf. ein Kompromiss zu finden.

Der erste Verstellgradient und/oder der zweite Verstellgradient ist bzw. sind jeweils ein Gradient aus dem Pitchwinkel und der aerodynamischen Leistung. Der erste Verstellgradient und/oder der zweite Verstellgradient sind somit ein Maß für die Steigung der Kurve, die den Pitchwinkel in Abhängigkeit von der aerodynamischen Leistung darstellt.

Eine weitere bevorzugte Ausführungsvariante des Verfahrens zeichnet sich dadurch aus, dass der Pitchwinkelsollwert mit der folgenden abschnittsweise linearen Steuerfunktion ermittelt wird:

$$\alpha = \alpha_{min} + \begin{cases} 0, \ wenn \ P_{aero} < P_{min,1}, \\ \frac{\partial \alpha}{\partial P_1} * (P_{aero} - P_{min,1}), \ wenn \ P_{min,1} \leq P_{aero} < P_{min,2}, \\ \frac{\partial \alpha}{\partial P_1} * (P_{min,2} - P_{min,1}) + \frac{\partial \alpha}{\partial P_2} * (P_{aero} - P_{min,2}), \ wenn \ P_{min,2} \leq P_{aero} \end{cases},$$

wobei $\alpha$ der Pitchwinkelsollwert, $\alpha_{min}$ der Mindestpitchwinkel, $P_{aero}$ die aerodynamische Leistung, $P_{min,1}$ der erste Leistungsschwellwert, $P_{min,2}$ der zweite Leistungsschwellwert, $\frac{\partial \alpha}{\partial P_1}$ ein erster Verstellgradient und $\frac{\partial \alpha}{\partial P_2}$ ein zweiter Verstellgradient ist.

Es ist bevorzugt, dass mindestens ein Signal, insbesondere das die Winkelbeschleunigung charakterisierende Signal, gefiltert wird. Dadurch kann verhindert werden, dass bekannte Störungen auf den Pitchwinkel zurückgekoppelt werden. Dies betrifft beispielsweise hochfrequente Störungen oder bekannte Rotorharmonische.

In einer weiteren bevorzugten Fortbildung des Verfahrens ist vorgesehen, dass das Einstellen des Pitchwinkels gemäß dem ermittelten Pitchwinkelsollwert lediglich dann erfolgt, wenn die Differenz aus dem ermittelten Pitchwinkelsollwert und einem eingestellten Pitchwinkelwert größer ist als ein Mindesteinstellwinkel.

Der Mindesteinstellwinkel ermittelt sich aus dem ermittelten Pitchwinkelsollwert abzüglich des eingestellten Pitchwinkelwerts. Der eingestellte Pitchwinkelwert repräsentiert einen an der Windenergieanlage eingestellten Pitchwinkel beispielsweise zum Zeitpunkt des Ermittelns des Pitchwinkelsollwerts und/oder unmittelbar vor Einstellen des Pitchwinkels gemäß dem ermittelten Pitchwinkelsollwert.

Es ist insbesondere bevorzugt, dass der Betrag der Differenz aus dem ermittelten Pitchwinkelsollwert und dem eingestellten Pitchwinkelwert berücksichtigt wird. Diese Verfahrensvariante hat den Vorteil, dass der Pitchwinkel nicht ständig korrigiert wird. Dies würde zu einem unnötigen und wirtschaftlich wenig vorteilhaften Betrieb führen. Darüber hinaus würde auch der Verschleiß der Windenergieanlage erhöht werden. Es wird somit vorgeschlagen, eine Mindestverfahrstrecke zu definieren.

Der Betrag des Mindesteinstellwinkels beträgt vorzugsweise zwischen 0,1° und 0,3°, insbesondere zwischen 0,15° und 0,25°.

In einer weiteren bevorzugten Fortbildung des Verfahrens ist vorgesehen, dass das Ermitteln des Pitchwinkelsollwerts in Abhängigkeit von der aerodynamischen Leistung in einem oberen Teillastbereich erfolgt, wobei der obere Teillastbereich zwischen einem Volllastbereich und einem unteren Teillastbereich liegt.

Der obere Teillastbereich liegt zwischen dem Volllastbereich und dem unteren Teillastbereich. Der Volllastbereich zeichnet sich insbesondere dadurch aus, dass die Windenergieanlage mit Nenndrehzahl und/oder Nennleistung betrieben wird. Der untere Teillastbereich zeichnet sich insbesondere dadurch aus, dass in diesem eine deutlich geringere Leistung erzeugt wird als im Volllastbereich. Beispielsweise kann die erzeugte Leistung im unteren Teillastbereich weniger als 60 %, weniger als 50 % oder weniger als 40 % der Nennleistung sein.

Der obere Teillastbereich ist insbesondere dadurch gekennzeichnet, dass sich die Drehzahl bei zunehmender Windgeschwindigkeit im Wesentlichen nicht erhöht, sondern im Wesentlichen konstant bleibt. Im Wesentlichen bedeutet vorliegend beispielsweise, dass sich die Drehzahl um weniger als 10 % oder weniger als 20 % vom unteren Ende des oberen Teillastbereichs hin zum oberen Ende des oberen Teillastbereichs erhöht.

Der untere Teillastbereich, der obere Teillastbereich und/oder der Volllastbereich kann durch die aerodynamische Leistung oder durch die elektrische Leistung definiert werden.

Gemäß einem weiteren Aspekt wird die eingangs genannte Aufgabe gelöst durch eine Steuerungsvorrichtung zum Einstellen eines Pitchwinkels eines Rotorblatts für einen Rotor einer gemäß Anspruch 12.

Zur Ermittlung des Pitchwinkelsollwerts kann die Steuerungsvorrichtung beispielsweise eine Recheneinheit umfassen. Ferner vorzugsweise kann die Steuerungsvorrichtung eine mit der Recheneinheit gekoppelte Speichereinheit umfassen. Die Steuerungsvorrichtung ist vorzugsweise eingerichtet, um die im Vorherigen definierte abschnittsweise lineare Steuerfunktion auszuführen.

Die Steuerungseinheit ist ferner vorzugsweise mit weiteren Steuereinheiten und/oder mit Messsystemen gekoppelt, damit der Steuerungsvorrichtung beispielsweise die elektrische Leistung, die Verlustleistung und/oder die Beschleunigungsleistung des Rotors bereitgestellt wird. Darüber hinaus ist die Steuerungsvorrichtung vorzugsweise eingerichtet, die Verlustleistung zu ermitteln, indem dieser die elektrische Leistung bereitgestellt wird. Auch die Beschleunigungsleistung kann von der Steuerungsvorrichtung ermittelt werden, beispielsweise, indem dieser die Winkelgeschwindigkeit und/oder die Winkelbeschleunigung des Rotors bereitgestellt wird.

Die Steuerungsvorrichtung kann mit dem Pitchantrieb signaltechnisch gekoppelt sein bzw. werden, um diesen anzusteuern. Das Ansteuern des Pitchantriebs kann durch eine Bereitstellung des Pitchwinkelsollwerts erfolgen. Die Steuerungsvorrichtung kann beispielsweise eingerichtet sein, um den Pitchantrieb aktiv anzusteuern. Darüber hinaus kann die Steuerungsvorrichtung auch passiv agieren, sodass beispielsweise der Pitchantrieb den Pitchwinkelsollwert von der Steuerungsvorrichtung abfragt.

In einer bevorzugten Fortbildung der Steuerungsvorrichtung ist vorgesehen, dass der Pitchwinkelsollwert aus einem Verstellgradienten gebildet wird, wobei der Verstellgradient aus einem Pitchwinkel und der aerodynamischen Leistung gebildet wird.

Ferner ist es bevorzugt, dass die Steuerungsvorrichtung mit einem Pitchantrieb zum Verstellen eines eingestellten Pitchwinkels des Rotorblatts signaltechnisch gekoppelt ist und wobei die Steuerungsvorrichtung den Pitchwinkelsollwert dem Pitchantrieb bereitstellt.

In einer besonders bevorzugten Ausführungsvariante der Steuerungsvorrichtung ist vorgesehen, dass diese eine Reglerstruktur umfasst, die eingerichtet ist, den Pitchwinkel auf Basis des Pitchwinkelsollwerts zu regeln, wobei die Reglerstruktur mindestens eine erste Einheit zur Bestimmung der aerodynamischen Leistung und eine zweite Einheit zum Ermitteln des Pitchwinkelsollwerts in Abhängigkeit von der aerodynamischen Leistung aufweist.

Gemäß einem weiteren Aspekt wird die eingangs genannte Aufgabe gelöst durch eine Windenergieanlage mit einem Rotor, der ein pitchverstellbares Rotorblatt aufweist, wobei mit einem Pitchantrieb ein Pitchwinkel des Rotorblatts einstellbar ist, wobei die Windenergieanlage eingerichtet ist, ein Verfahren nach einem der im Vorherigen beschriebenen Ausführungsvarianten auszuführen, und/oder umfassend eine Steuerungsvorrichtung nach einer der im Vorherigen beschriebenen Ausführungsvarianten, wobei die Steuerungsvorrichtung signaltechnisch mit dem Pitchantrieb gekoppelt und eingerichtet ist, dem Pitchantrieb einen in Abhängigkeit von einer aerodynamischen Leistung ermittelten Pitchwinkelsollwert bereitzustellen, wobei der Pitchantrieb den Pitchwinkel auf Basis des Pitchwinkelsollwerts einstellt.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens zum Einstellen eines Pitchwinkels eines Rotorblatts für einen Rotor einer Windenergieanlage verwiesen.

Bevorzugte Ausführungsbeispiele werden exemplarisch anhand der beiliegenden Figuren erläutert. Es zeigen:

Figur 1:     eine schematische, dreidimensionale Ansicht einer beispielhaften Ausführungsform einer Windenergieanlage;

Figur 2-4:     schematische, zweidimensionale Ansichten von beispielhaften Strömungszuständen an einem Rotorblatt;

Figur 5:     eine schematische Ansicht einer im Stand der Technik bekannten Reglerstruktur zur Einstellung eines Pitchwinkels;

Figur 6:      ein beispielhaftes Diagramm eines über die Zeit aufgetragenen Leistungsverlaufs;

Figur 7:      ein schematisches Diagramm zur Darstellung von Lastbereichen;

Figur 8:      ein beispielhaftes Diagramm zur Darstellung von Verstellgradienten;

Figur 9:      eine schematische, beispielhafte Ansicht einer Steuerungsvorrichtung mit einer Reglerstruktur;

Figur 10:     ein schematisches Verfahren.

In den Figuren sind gleiche oder im Wesentlichen funktionsgleiche bzw. -ähnliche Elemente mit den gleichen Bezugszeichen bezeichnet.

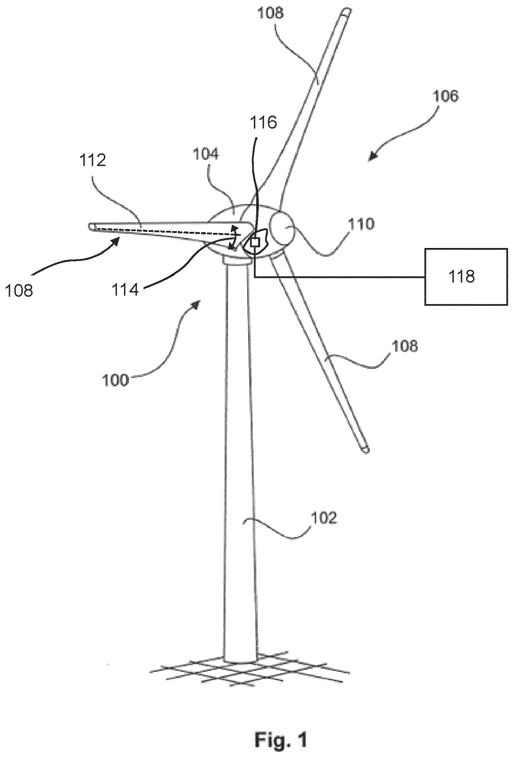

Figur 1 zeigt eine schematische, dreidimensionale Ansicht einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108, die jeweils eine Rotorblattlänge aufweisen, und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Die Rotorblätter 108 weisen jeweils eine Rotorblattlängsachse 112 auf. Die Rotorblattlängsachse 112 erstreckt sich im Wesentlichen von einem Wurzelbereich des Rotorblatts, der der Gondel 104 zugewandt ist, hin zu einer Rotorblattspitze, die der Gondel 104 abgewandt ist. Die Rotorblätter 108 sind rotatorisch bewegbar um die Rotorblattlängsachse 112 angeordnet. Insbesondere ist ein Pitchwinkel 114 durch die rotatorische Bewegung der Rotorblätter 108 um die Rotorblattlängsachse 112 einstellbar.

Zur Einstellung des Pitchwinkels 114 weist die Windenergieanlage 100 Pitchantriebe 116 auf. Die Pitchantriebe 116 koppeln die Rotorblätter 108 mit der Gondel 104. Ferner sind die Pitchantriebe 116 derart angeordnet, dass diese eine rotatorische Bewegung der Rotorblätter 108 um ihre Rotorblattlängsachse 112 bewirken können. Die Windenergieanlage 100 weist ferner eine Steuerungsvorrichtung 118 auf. Die Steuerungsvorrichtung 118 ist zum Einstellen des Pitchwinkels 114 der Rotorblätter 108 ausgebildet. Insbesondere ist die Steuerungsvorrichtung 118 eingerichtet, um in Abhängigkeit von einer aerodynamischen Leistung des Rotors 106 einen Pitchwinkelsollwert zu ermitteln und den Pitchantrieb 116 zum Einstellen des Pitchwinkels 114 derart anzusteuern, dass der Pitchwinkel 114 mittels des Pitchantriebs 116 gemäß dem ermittelten Pitchwinkelsollwert eingestellt wird.

Die Windenergieanlage 100 ist insbesondere zur Durchführung eines Verfahrens zum Einstellen des Pitchwinkels 114 mindestens eines Rotorblatts 108 für den Rotor 106 eingerichtet. Dieses Verfahren ist insbesondere zur Vermeidung einer saugseitigen Strömungsablösung geeignet, wie im Folgenden noch näher erläutert wird. Das Verfahren umfasst die Schritte: Bestimmen einer aerodynamischen Leistung des Rotors 106 und/oder mindestens eines Rotorblatts 108, Ermitteln eines Pitchwinkelsollwerts in Abhängigkeit von der aerodynamischen Leistung, und Einstellen des Pitchwinkels 114 gemäß dem ermittelten Pitchwinkelsollwert.

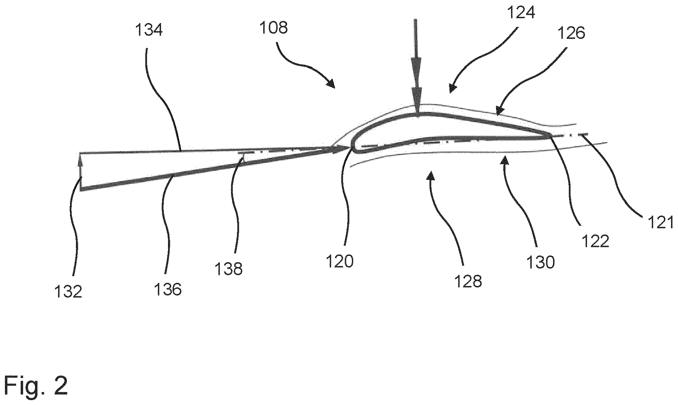

Die Figuren 2 - 4 zeigen schematische, zweidimensionale Ansichten von beispielhaften Strömungszuständen an einem Rotorblatt. Das Rotorblatt 108 erstreckt sich in Richtung seiner Profiltiefe von einer Vorderkante 120 hin zu einer Hinterkante 122. Das Rotorblatt 108 weist eine Saugseite 124 und eine Druckseite 128 auf. Auf der Druckseite 128 herrscht im Betrieb ein Überdruck und auf der Saugseite 124 herrscht ein Unterdruck. Aufgrund des Überdrucks und des Unterdrucks wird das Rotorblatt in eine Bewegung versetzt. Auf der Saugseite 124 herrscht eine saugseitige Strömung 126. Auf der Druckseite 128 herrscht eine druckseitige Strömung 130.

Die Strömungen 126, 130 werden durch einen auf das Rotorblatt 108 auftreffenden Wind erzeugt. Der Wind weist an dem Rotorblatt 108 eine Anströmgeschwindigkeit 136 auf, die sich aus der Umfangsgeschwindigkeit 134 und der Windgeschwindigkeit 132 zusammensetzt. Zwischen der Richtung der Anströmgeschwindigkeit 136 und einer Profilsehne 121 stellt sich der Anstellwinkel 138 ein. Die Profilsehne 121 erstreckt sich von der Vorderkante 120 hin zur Hinterkante 122.

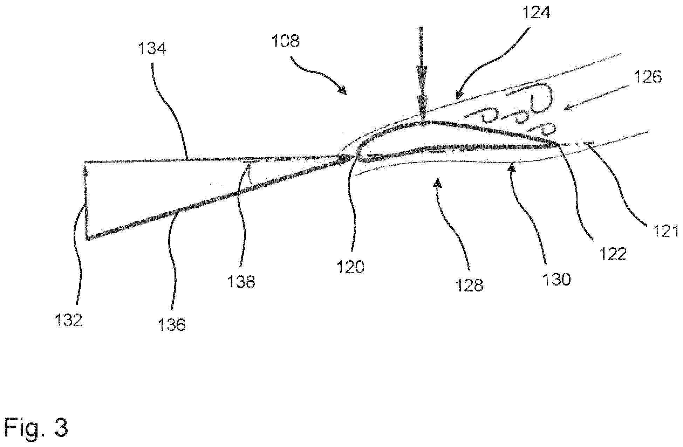

In Figur 3 ist die Strömungssituation für eine größere Windgeschwindigkeit 132 dargestellt. Durch die im Wesentlichen gleichbleibende Drehzahl und somit im Wesentlichen gleichbleibende Umfangsgeschwindigkeit 134 verändert sich der Anstellwinkel 138. Infolgedessen ist die Richtung der Anströmgeschwindigkeit 136 verändert. Die Vergrößerung des Anstellwinkels 138 begünstigt eine Strömungsablösung auf der Saugseite 124. Die Ablösung erfolgt physikalisch durch einen Druckanstieg im oberflächennahen Bereich. Der Druckanstieg bedeutet insbesondere eine Verzögerung der saugseitigen Strömung 126, wobei kinetische Energie innerhalb der Grenzschicht aufgezehrt wird. Dies führt zu einer schnellen Reduktion der Geschwindigkeit im oberflächennahen Bereich, sodass ein entsprechend starker Druckanstieg in der Regel festzustellen ist.

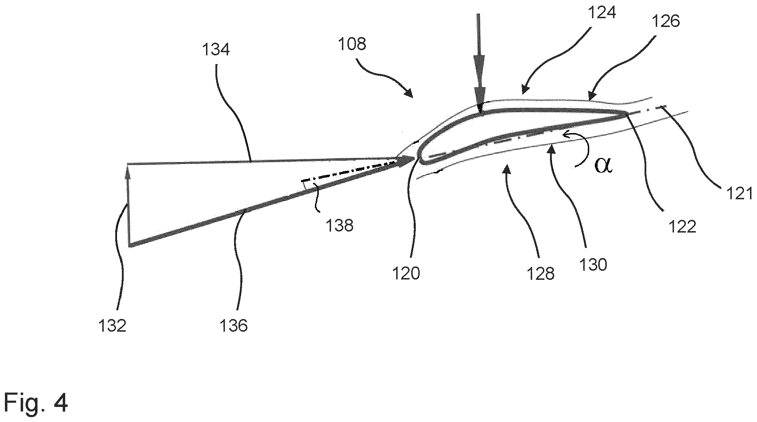

Diesem Phänomen kann entgegengewirkt werden, wenn wie in Figur 4 gezeigt der Pitchwinkel $\alpha$ verändert

wird. Durch die Veränderung des Pitchwinkels α, also der Veränderung des Winkels zwischen Profilsehne 121 und der Richtung des Windes 132, kann der Anstellwinkel 138 wieder verkleinert werden. Durch die Verkleinerung des Anstellwinkels 138 umströmt die saugseitige Strömung 126 die Saugseite 124 wieder ablösefrei.

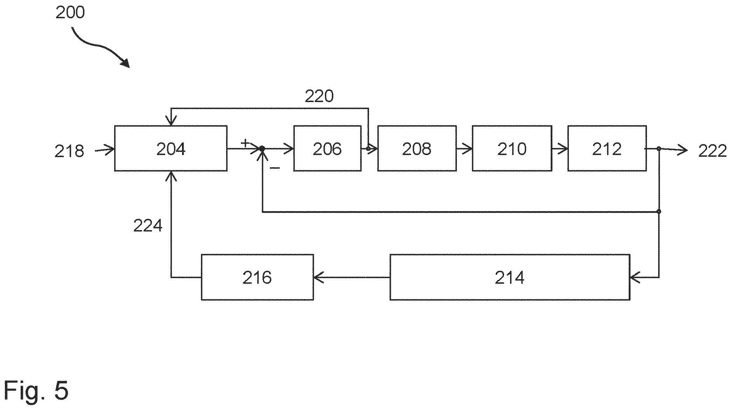

Figur 5 zeigt eine schematische Ansicht einer im Stand der Technik bekannten Reglerstruktur zur Einstellung eines Pitchwinkels. Der Anstellwinkel 204 wird durch eine Windgeschwindigkeit 218, eine Drehzahl 220 und somit durch eine Umfangsgeschwindigkeit, und den Pitchwinkel 224 beeinflusst. In der hier gezeigten, im Stand der Technik bekannten Reglerstruktur erfolgt die Einstellung des Anstellwinkels 204 über den Pitchwinkel 224, in dem der erforderliche Pitchwinkel über eine elektrische Leistung 222 bestimmt wird.

Hierfür weist die Reglerstruktur 200 eine Bestimmung der Rotorträgheit 206 und eine Drehzahlmessung 208 auf. Nach einer Leistungsvorgabe 210 erfolgt eine Leistungsregelung 212. Durch die Leistungsregelung 212 wird ein Blattwinkelsollwert 214 bestimmt, der dem Pitchsystem 216 bereitgestellt wird. Hieraus wird der einzustellende Pitchwinkel 224 bestimmt. Durch die Steuerung des Pitchwinkels 224 mittels der elektrischen Leistung 222 kommt es zu erkennbaren Verzögerungen. Diese Verzögerungen sind beispielsweise begründet im Pitchsystem 216, in der Leistungsregelung 212 und in der Drehzahlmessung 208 sowie in der Rotorträgheit 206.

Diese Verzögerungen in der gezeigten Reglerstruktur 200 führen zu einem Phasenverzug, welcher das zulässige Maß an Rückführverstärkung begrenzt. Je langsamer beispielsweise die Leistungsregelung 212 bei einem Drehzahlanstieg mit einer Erhöhung der elektrischen Leistung 222 reagiert, desto geringer müssen in der Regel Änderungen in der Blattwinkelsollwertbestimmung 214 sein, damit die Reglerstruktur stabil bleibt.

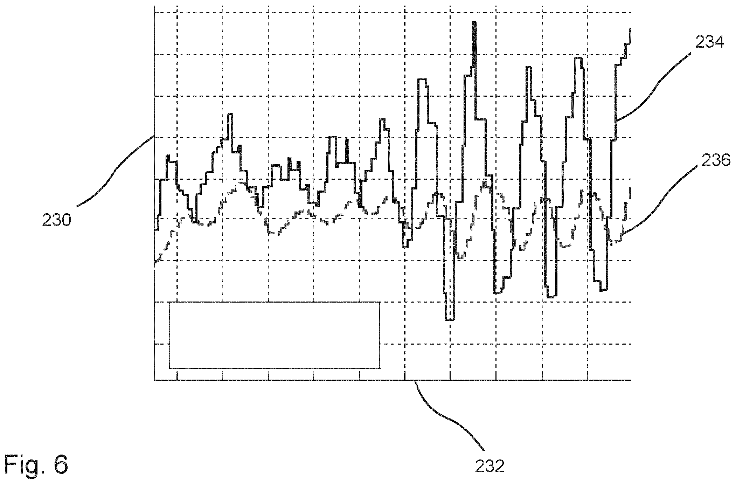

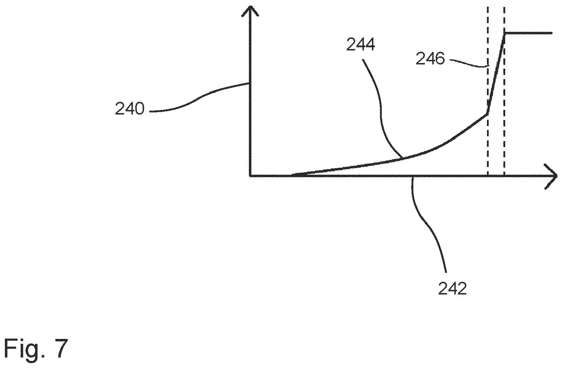

Aufgrund dieser Verzögerungen erfolgt die in Figur 6 gezeigte Phasenverschiebung zwischen der aerodynamischen Leistung 234 und der elektrischen Leistung 236. Auf der Abszisse ist hier die Zeit 232 und auf der Ordinate die Leistung 230 aufgetragen. Es ist zu erkennen, dass zwischen der aerodynamischen Leistung und der elektrischen Leistung eine Phasenverschiebung von ca. 90° besteht. Dieser Phasenverzug führt zu einer nicht optimalen Einstellung des Pitchwinkels. Dieses Phänomen ist insbesondere in einem in der Figur 7 gezeigten oberen Teillastbereich 246 relevant. Dies begründet sich dadurch, dass die Drehzahl hier im Wesentlichen konstant ist, sodass im aerodynamischen Modell die Umfangsgeschwindigkeit ebenfalls im Wesentlichen konstant ist.

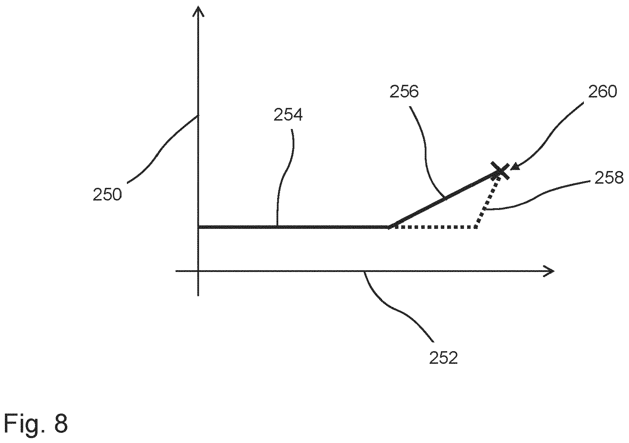

Die in Figur 7 aufgetragene Drehzahlleistungskennlinie 244 zeigt die Leistung 240 in Abhängigkeit von der Drehzahl 242. In dem oberen Teillastbereich 246 steigt die Leistung 240 stark an, wobei die Drehzahl 242 im Wesentlichen konstant bleibt. Durch die Verzögerungen ist die Einstellung eines Pitchwinkelsollwerts ebenfalls mit Verzögerungen verbunden. Dieses Phänomen ist insbesondere Figur 8 zu entnehmen. Dort ist die Leistung 252 über einem Pitchwinkel 250 aufgetragen. Die Pitchwinkelkurve 254 zeigt zwei unterschiedliche Charakteristika. Zur Erreichung eines Pitchwinkelsollwerts 260 sind hier zwei unterschiedliche Verstellgradienten 256, 258 gezeigt.

Durch die Verzögerungen ist lediglich ein geringerer erster Verstellgradient 256 möglich. Durch die oben beschriebenen Aspekte zur Lösung der Aufgabe kann der zweite Verstellgradient 258 realisiert werden. Insbesondere durch die Einstellung des Pitchwinkelsollwerts, insbesondere zur Bestimmung eines Verstellgradienten, auf Basis der aerodynamischen Leistung und nicht aufgrund der elektrischen Leistung kann dieser höhere zweite Verstellgradient 258 ermöglicht werden. Es ist aus der Figur 8 ersichtlich, dass erst ab einer höheren Grenzleistung herausgepitcht wird, um bei einer Grenzleistung einen benötigten Pitchwinkel zu erreichen. Dies wird insbesondere durch den steileren zweiten Verstellgradienten 258 ermöglicht. Dadurch kann mit steileren Verstellgradienten in einem größeren Betriebsbereich der Anlage bei wirtschaftlich vorteilhaften, kleinen Pitchwinkeln die Windenergieanlage betrieben werden.

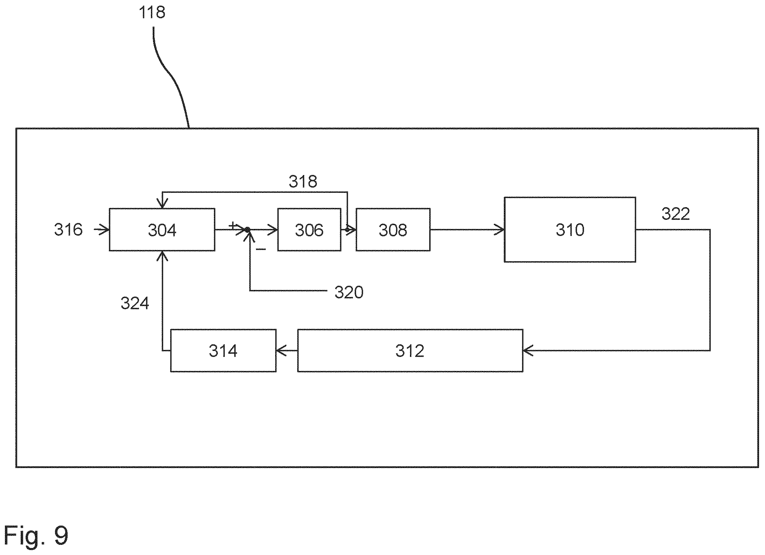

Derartige steilere zweite Verstellgradienten 258 werden beispielsweise mit der in Figur 9 gezeigten Steuerungsvorrichtung 118 mit der dort gezeigten Reglerstruktur ermöglicht. Der Anstellwinkel 304 ist abhängig von der Windgeschwindigkeit 316, der Drehzahl 318 und dem Pitchwinkel 324. Die aerodynamische Leistungsbestimmung 310 wird mittels einer Rotorträgheit 306 und einer Drehzahlmessung 308 sowie der Berücksichtigung der elektrischen Leistung 320 bestimmt. Auf Basis der aerodynamischen Leistung 322 kann ein Verstellgradient 312 bestimmt werden, der dem Pitchsystem 314 bereitgestellt wird. Das Pitchsystem 314 stellt dann einen definierten Pitchwinkel 324 an der Anlage ein. Infolgedessen sind steilere Verstellgradienten 312 möglich, sodass die Windenergieanlage in einem größeren Betriebsbereich wirtschaftlich mit kleineren Blattwinkeln betrieben werden kann.

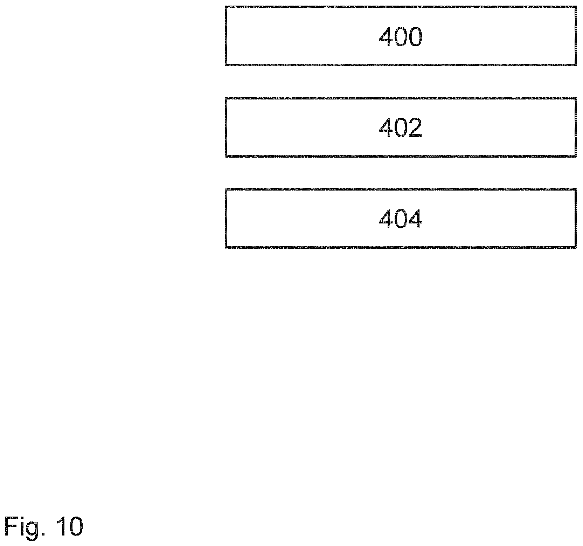

Figur 10 zeigt ein schematisches Verfahren. In Schritt 400 wird eine aerodynamische Leistung des Rotors der Windenergieanlage bestimmt. In Schritt 402 wird ein Pitchwinkelsollwert in Abhängigkeit von der aerodynamischen Leistung ermittelt. In Schritt 404 wird der Pitchwinkel gemäß dem ermittelten Pitchwinkelsollwert eingestellt. Aufgrund der Bestimmung des Pitchwinkelsollwerts in Abhängigkeit von der aerodynamischen Leistung und nicht in unmittelbarer Abhängigkeit von der elektrischen Leistung kommt es zu geringeren Verzögerungen und somit kann die Anlage länger wirtschaftlich bei einem geringeren Pitchwinkel betrieben werden.

**BEZUGSZEICHEN**

| | |
|---|---|
| 100 | Windenergieanlage |
| 102 | Turm |
| 104 | Gondel |
| 106 | Rotor |
| 108 | Rotorblätter |
| 110 | Spinner |
| 112 | Rotorblattlängsachse |
| 114 | Pitchwinkel |
| 116 | Pitchantrieb |
| 118 | Steuerungsvorrichtung |
| 120 | Vorderkante |
| 121 | Profilsehne |
| 122 | Hinterkante |
| 124 | Saugseite |
| 126 | saugseitige Strömung |
| 128 | Druckseite |
| 130 | druckseitige Strömung |
| 132 | Windgeschwindigkeit |
| 134 | Umfangsgeschwindigkeit |
| 136 | Anströmgeschwindigkeit |
| 138 | Anstellwinkel |
| 200 | erste Reglerstruktur |
| 204 | Anstellwinkel |
| 206 | Rotorträgheit |
| 208 | Drehzahlmessung |
| 210 | Leistungsvorgabe |
| 212 | Leistungsregelung |
| 214 | Blattwinkelsollwert |
| 216 | Pitchsystem |
| 218 | Windgeschwindigkeit |
| 220 | Drehzahl |
| 222 | elektrische Leistung |
| 224 | Pitchwinkel |
| 230 | Leistung |
| 232 | Zeit |
| 234 | aerodynamische Leistung |
| 236 | elektrische Leistung |
| 240 | Leistung |
| 242 | Drehzahl |
| 244 | Leistungskurve |
| 246 | oberer Teillastbereich |
| 250 | Pitchwinkel |
| 252 | Leistung |
| 254 | Pitchwinkelkurve |
| 256 | erster Verstellgradient |
| 258 | zweiter Verstellgradient |
| 260 | Pitchwinkelsollwert |
| 304 | Anstellwinkel |
| 306 | Rotorträgheit |
| 308 | Drehzahlmessung |
| 310 | Bestimmung aerodynamische Leistung |
| 312 | Pitchwinkelsollwert |
| 314 | Pitchsystem |
| 316 | Windgeschwindigkeit |
| 318 | Drehzahl |
| 320 | elektrische Leistung |
| 322 | aerodynamische Leistung |
| 324 | Pitchwinkel |

**Patentansprüche**

1. Verfahren zum Einstellen eines Pitchwinkels (324) eines Rotorblatts (108) für einen Rotor (106) einer Windenergieanlage (100), insbesondere zur Vermeidung einer saugseitigen Strömungsablösung, wobei das Rotorblatt (108) zum Einstellen des Pitchwinkels (324) mittels eines Pitchantriebs (116, 314) um eine Rotorblattlängsachse (112) rotatorisch bewegbar ist, umfassend die Schritte:

   - Bestimmen (400) einer aerodynamischen Leistung (322) des Rotors (106),
   - Ermitteln (402) eines Pitchwinkelsollwerts (312) in Abhängigkeit von der aerodynamischen Leistung (322), und
   - Einstellen (404) des Pitchwinkels (324) gemäß dem ermittelten Pitchwinkelsollwert (312),

   **dadurch gekennzeichnet, dass**
   das Ermitteln des Pitchwinkelsollwerts (312) auf Basis eines in einer abschnittsweise linearen Steuerfunktion abgebildeten aerodynamischen Leistungsfaktors erfolgt, wobei Abschnitte der abschnittsweise linearen Steuerfunktion durch die aerodynamische Leistung (322) definiert sind.

2. Verfahren nach Anspruch 1, wobei die aerodynamische Leistung (322) aus einer erzeugten elektrischen Leistung (320), einer Verlustleistung und/oder einer Beschleunigungsleistung des Rotors ermittelt wird, wobei vorzugsweise die aerodynamische Leistung (322) die Summe aus der elektrischen Leistung (320), der Verlustleistung und der Beschleunigungsleistung ist.

3. Verfahren nach dem vorherigen Anspruch 2, wobei die Verlustleistung aus der Summe aus einer messbaren Verlustleistung und einer geschätzten Verlustleistung gebildet wird, wobei vorzugsweise die geschätzte Verlustleistung durch eine Multiplikation eines Schätzparameters mit der elektrischen Leistung (320) ermittelt wird, und/oder wobei die Beschleunigungsleistung aus einem Trägheitsmoment des Rotors, einer Winkelgeschwindigkeit und/oder einer Winkelbeschleunigung ermittelt wird, wobei vorzugsweise die Beschleunigungsleistung durch eine Multiplikation des Trägheitsmoments des Rotors mit der Winkelgeschwindigkeit und/oder mit der Winkelbeschleunigung ermittelt wird.

4. Verfahren nach einem der vorherigen Ansprüche, wobei der Pitchwinkelsollwert (312) aus einem Verstellgradienten gebildet wird, wobei der Verstellgradient aus dem Pitchwinkel (324) und der aerodynamischen Leistung (322) gebildet wird.

5. Verfahren nach einem der vorherigen Ansprüche, wobei der aerodynamische Leistungsfaktor ein leistungsabhängiger Zusatzblattwinkel ist.

6. Verfahren nach einem der vorherigen Ansprüche, wobei ein Mindestpitchwinkel bei dem Ermitteln des Pitchwinkelsollwerts (312) berücksichtigt wird, wobei vorzugsweise der Mindestpitchwinkel und der aerodynamische Leistungsfaktor, insbesondere der leistungsabhängige Zusatzblattwinkel, berücksichtigt werden, wobei ferner vorzugsweise der Mindestpitchwinkel und der aerodynamische Leistungsfaktor, insbesondere der leistungsabhängige Zusatzblattwinkel, miteinander summiert werden, um den Pitchwinkelsollwert (312) zu ermitteln.

7. Verfahren nach einem der vorherigen Ansprüche, wobei die abschnittsweise lineare Funktion einen ersten Abschnitt, einen zweiten Abschnitt und vorzugsweise einen dritten Abschnitt aufweist, wobei

   - der erste Abschnitt für eine aerodynamische Leistung (322) definiert ist, die kleiner als ein erster Leistungsschwellwert ist, wobei der Pitchwinkelsollwert (312) im ersten Abschnitt im Wesentlichen dem Mindestpitchwinkel entspricht, und/oder
   - der zweite Abschnitt für eine aerodynamische Leistung (322) definiert ist, die größer gleich dem ersten Leistungsschwellwert und kleiner als ein zweiter Leistungsschwellwert ist, wobei der Pitchwinkelsollwert (312) im zweiten Abschnitt eine Summe aus dem Mindestpitchwinkel und einem ersten aerodynamischen Leistungsfaktor beträgt, wobei vorzugsweise der erste aerodynamische Leistungsfaktor in Abhängigkeit von einem ersten Verstellgradienten, und/oder der aerodynamischen Leistung (322), und/oder des ersten Leistungsschwellwerts ermittelt wird, und/oder
   - der dritte Abschnitt für eine aerodynamische Leistung (322) definiert ist, die größer gleich dem zweiten Leistungsschwellwert ist, wobei der Pitchwinkelsollwert (312) im dritten Abschnitt eine Summe aus dem Mindestpitchwinkel und einem zweiten aerodynamischen Leistungsfaktor beträgt, wobei vorzugsweise der zweite aerodynamische Leistungsfaktor in Abhängigkeit von einem zweiten Verstellgradienten, und/oder der aerodynamischen Leistung (322), und/oder des zweiten Leistungsschwellwerts, und/oder des ersten Verstellgradienten, und/oder einer Differenz aus dem zweitem Leistungsschwellwert und dem ersten Leistungsschwellwert ermittelt wird.

8. Verfahren nach einem der vorherigen Ansprüche, wobei der Pitchwinkelsollwert (312) mit der folgenden abschnittsweise linearen Steuerfunktion ermittelt wird:

$$\alpha = \alpha_{min} + \left\{ \begin{array}{c} 0, \ wenn \ P_{aero} < P_{min,1}, \\ \frac{\partial \alpha}{\partial P_1} * \left( P_{aero} - P_{min,1} \right), \ wenn \ P_{min,1} \leq P_{aero} < P_{min,2}, \\ \frac{\partial \alpha}{\partial P_1} * \left( P_{min,2} - P_{min,1} \right) + \frac{\partial \alpha}{\partial P_2} * \left( P_{aero} - P_{min,2} \right), \ wenn \ P_{min,2} \leq P_{aero} \end{array} \right\},$$

wobei $\alpha$ der Pitchwinkelsollwert (312), $\alpha_{min}$ der Mindestpitchwinkel, $P_{aero}$ die aerodynamische Leistung (322), $P_{min,1}$ der erste Leistungsschwellwert, $P_{min,2}$ der zweite Leistungsschwellwert, $\frac{\partial \alpha}{\partial P_1}$ ein erster Verstellgradient und $\frac{\partial \alpha}{\partial P_2}$ ein zweiter Verstellgradient ist.

9. Verfahren nach einem der vorherigen Ansprüche, wobei mindestens ein Signal, insbesondere das die Winkelbeschleunigung charakterisierende Signal, gefiltert wird.

10. Verfahren nach einem der vorherigen Ansprüche, wobei das Einstellen des Pitchwinkels (324) gemäß dem ermittelten Pitchwinkelsollwert (312) lediglich dann erfolgt, wenn die Differenz aus dem ermittelten Pitchwinkelsollwert (312) und einem eingestellten Pitchwinkelwert größer ist als ein Mindesteinstellwinkel.

11. Verfahren nach einem der vorherigen Ansprüche, wobei das Ermitteln des Pitchwinkelsollwerts (312) in Abhängigkeit von der aerodynamischen Leistung (322) in einem oberen Teillastbereich erfolgt, wobei der obere Teillastbereich zwischen einem Volllastbereich und einem unteren Teillastbereich liegt.

12. Steuerungsvorrichtung (118) zum Einstellen eines Pitchwinkels (324) eines Rotorblatts (108) für einen Rotor einer Windenergieanlage, die eingerichtet ist, um in Abhängigkeit von einer aerodynamischen Leistung (322) des Rotors einen Pitchwinkelsollwert (312) zu ermitteln und einen Pitchantrieb (116) zum Einstellen des Pitchwinkels (324) des Rotorblatts (108) derart anzusteuern, dass der Pitchwinkel (324) mittels des Pitchantriebs (116) gemäß dem ermittelten Pitchwinkelsollwert (312) eingestellt wird,
**dadurch gekennzeichnet, dass**
das Ermitteln des Pitchwinkelsollwerts (312) auf Basis eines in einer abschnittsweise linearen Steuerfunktion abgebildeten aerodynamischen Leistungsfaktors erfolgt, wobei Abschnitte der abschnittsweise linearen Steuerfunktion durch die aerodynamische Leistung (322) definiert sind, wobei der Pitchwinkelsollwert (312) vorzugsweise aus einem Verstellgradienten gebildet wird, wobei der Verstellgradient aus einem Pitchwinkel (324) und der aerodynamischen Leistung (322) gebildet wird.

13. Steuerungsvorrichtung (118) nach Anspruch 12, die mit einem Pitchantrieb zum Verstellen eines eingestellten Pitchwinkels des Rotorblatts (108) signaltechnisch gekoppelt ist und wobei die Steuerungsvorrichtung (118) den Pitchwinkelsollwert (312) dem Pitchantrieb bereitstellt.

14. Steuerungsvorrichtung (118) nach einem der Ansprüche 12 oder 13, umfassend eine Reglerstruktur, die eingerichtet ist, den Pitchwinkel (324) auf Basis des Pitchwinkelsollwerts (312) zu regeln, wobei die Reglerstruktur mindestens eine erste Einheit (310) zur Bestimmung der aerodynamischen Leistung und eine zweite Einheit zum Ermitteln des Pitchwinkelsollwerts in Abhängigkeit von der aerodynamischen Leistung aufweist.

15. Windenergieanlage (100) mit einem Rotor (106), der ein pitchverstellbares Rotorblatt (108) aufweist, wobei mit einem Pitchantrieb (116) ein Pitchwinkel (324) des Rotorblatts (108) einstellbar ist,

- wobei die Windenergieanlage (100) eingerichtet ist, ein Verfahren nach einem der Ansprüche 1-11 auszuführen, und/oder
- umfassend eine Steuerungsvorrichtung (118) nach einem der Ansprüche 12-14, wobei die Steuerungsvorrichtung (118) signaltechnisch mit dem Pitchantrieb (116) gekoppelt und eingerichtet ist, dem Pitchantrieb einen in Abhängigkeit von einer aerodynamischen Leistung (322) ermittelten Pitchwinkelsollwert (312) bereitzustellen, wobei der Pitchantrieb den Pitchwinkel auf Basis des Pitchwinkelsollwerts (312) einstellt.

## Claims

1. A method for setting a pitch angle (324) of a rotor blade (108) for a rotor (106) of a wind turbine (100), in particular for avoiding suction-side flow separation, wherein the rotor blade (108) is movable rotationally about a rotor blade longitudinal axis (112) for setting the pitch angle (324) by means of a pitch drive (116, 314), comprising the steps:

   - determining (400) an aerodynamic power (322) of the rotor (106),
   - establishing (402) a nominal pitch angle (312) as a function of the aerodynamic power (322), and
   - setting (404) the pitch angle (324) to the established nominal pitch angle (312),

   **characterized in that**
   the nominal pitch angle (312) is established on the basis of an aerodynamic power factor depicted in a portionally linear control function, wherein the portions of the portionally linear control function are defined by the aerodynamic power (322).

2. The method according to claim 1, wherein the aerodynamic power (322) is established from a generated electrical power (320), a power loss and/or an acceleration power of the rotor, wherein preferably the aerodynamic power (322) is the sum of the electrical power (320), the power loss and the acceleration power.

3. The method according to preceding claim 2, wherein the power loss is formed from the sum of a measurable power loss and an estimated power loss, wherein preferably the estimated power loss is established by multiplying an estimation parameter by the electrical power (320) and/or wherein the acceleration power is established from an inertia moment of the rotor, an angular speed and/or an angular acceleration, wherein preferably the acceleration power is established by multiplying the inertia moment of the rotor by the angular speed and/or angular acceleration.

4. The method according to any of the preceding claims, wherein the nominal pitch angle (312) is formed from an adjustment gradient, wherein the adjustment gradient is formed from the pitch angle (324) and the aerodynamic power (322).

5. The method according to any of the preceding claims, wherein the aerodynamic power factor is a power-dependent additional blade angle.

6. The method according to any of the preceding claims, wherein a minimum pitch angle is taken into account when establishing the nominal pitch angle (312), wherein preferably the minimum pitch angle and the aerodynamic power factor, in particular the power-dependent additional blade angle, are taken into account, wherein furthermore preferably the minimum pitch angle and the aerodynamic power factor, in particular the power-dependent additional blade angle, are added together in order to establish the nominal pitch angle (312).

7. The method according to any of the preceding claims, wherein the portionally linear function has a first portion, a second portion and preferably a third portion, wherein

   - the first portion is defined for an aerodynamic power (322) which is less than a first power threshold value, wherein the nominal pitch angle (312) in the first portion corresponds substantially to the minimum pitch angle, and/or
   - the second portion is defined for an aerodynamic power (322) which is greater than or equal to the first power threshold value and less than a second power threshold value, wherein the nominal pitch angle (312) in the second portion is a sum of the minimum pitch angle and a first aerodynamic power factor, wherein preferably the first aerodynamic power factor is established as a function of a first adjustment gradient and/or the aerodynamic power (322) and/or the first power threshold value, and/or
   - the third portion is defined for an aerodynamic power (322) which is greater than or equal to the second power threshold value, wherein the nominal pitch angle (312) in the third portion is the sum of the minimum pitch angle and a second aerodynamic power factor, wherein preferably the second aerodynamic power factor is established as a function of a second adjustment gradient and/or the aerodynamic power (322) and/or the second power threshold value and/or the first adjustment gradient and/or a difference between the second power threshold value and the first power threshold value.

8. The method according to any of the preceding claims, wherein the nominal pitch angle (312) is established with the following portionally linear control function:

$$\alpha = \alpha_{min} + \begin{cases} 0, & if\ P_{aero} < P_{min,1}, \\ \frac{\partial \alpha}{\partial P_1} * \left(P_{aero} - P_{min,1}\right), & if\ P_{min,1} \leq P_{aero} < P_{min,2}, \\ \frac{\partial \alpha}{\partial P_1} * \left(P_{min,2} - P_{min,1}\right) + \frac{\partial \alpha}{\partial P_2} * \left(P_{aero} - P_{min,2}\right), & if\ P_{min,2} \leq P_{aero} \end{cases},$$

wherein $\alpha$ is the nominal pitch angle (312), $\alpha_{min}$ the minimum pitch angle, $P_{aero}$ the aerodynamic power (322), $P_{min,1}$ the first power threshold value, $P_{min,2}$ the second power threshold value, $\frac{\partial \alpha}{\partial P_1}$ a first adjustment gradient and $\frac{\partial \alpha}{\partial P_2}$ a second adjustment gradient.

9. The method according to any of the preceding claims, wherein at least one signal, in particular the signal characterizing the angular acceleration, is filtered.

10. The method according to any of the preceding claims, wherein the pitch angle (324) is only set to the established nominal pitch angle (312) if the difference between the established nominal pitch angle (312) and a set pitch angle value is greater than a minimum setting angle.

11. The method according to any of the preceding claims, wherein the nominal pitch angle (312) is established as a function of the aerodynamic power (322) in an upper partial load range, wherein the upper partial load range lies between a full load range and a lower partial load range.

12. A control device (118) for setting a pitch angle (324) of a rotor blade (108) for a rotor of a wind turbine, which is configured for establishing a nominal pitch angle (312) as a function of an aerodynamic power (322) of the rotor and actuating a pitch drive (116) to set the pitch angle (324) of the rotor blade (108) such that the pitch angle (324) is set to the established nominal pitch angle (312) by means of the pitch drive (116),
**characterized by** that
the nominal pitch angle (312) is established on the basis of an aerodynamic power factor depicted in a portionally linear control function, wherein the portions of the portionally linear control function are defined by the aerodynamic power (322), wherein the nominal pitch angle (312) is preferentially formed from an adjustment gradient, wherein the adjustment gradient is formed from a pitch angle (324) and the aerodynamic power (322).

13. The control device (118) according to claim 12, which is coupled to a pitch drive for signal transmission for adjusting a set pitch angle of the rotor blade (108), and wherein the control device (118) provides the nominal pitch angle (312) to the pitch drive.

14. The control device (118) according to one of the claims 12 or 13, comprising a controller structure which is configured to control the pitch angle (324) on the basis of the nominal pitch angle (312), wherein the controller structure has at least a first unit (310) for determining the aerodynamic power and a second unit for establishing the nominal pitch angle as a function of the aerodynamic power.

15. A wind turbine (100) with a rotor (106) having an adjustable-pitch rotor blade (108), wherein a pitch angle (324) of the rotor blade (108) can be set by means of a pitch drive (116),

- wherein the wind turbine (100) is configured to execute a method according to any of claims 1-11, and/or
- comprising a control device (118) according to any of claims 12-14, wherein the control device (118) is coupled to the pitch drive (116) for signal transmission and is configured to provide the pitch drive with a nominal pitch angle (312) which has been established as a function of an aerodynamic power (322), wherein the pitch drive sets the pitch angle on the basis of the nominal pitch angle (312).

**Revendications**

1. Procédé pour régler un angle de pas (324) d'une pale de rotor (108) pour un rotor (106) d'une éolienne (100), en particulier pour éviter un décollement de courant côté aspiration, dans lequel la pale de rotor (108) peut être déplacée par rotation autour d'un axe longitudinal de pale de rotor (112) au moyen d'un entraînement de pas (116, 314) pour régler l'angle de pas (324), comprenant les étapes :

   - de définition (400) d'une puissance aérodynamique (322) du rotor (106),
   - de détermination (402) d'une valeur de consigne d'angle de pas (312) en fonction de la puissance aérodynamique (322), et
   - de réglage (404) de l'angle de pas (324) selon la valeur de consigne d'angle de pas (312),

   **caractérisé en ce que**
   la détermination de la valeur de consigne d'angle de pas (312) est effectuée sur la base d'un facteur de puissance aérodynamique reproduit dans une fonction de commande par endroits linéaire, dans lequel des sections de la fonction de commande par endroits linéaire sont définies par la puissance aérodynamique (322).

2. Procédé selon la revendication 1, dans lequel la puissance aérodynamique (322) est déterminée à partir d'une puissance électrique (320) produite, d'une puissance de perte et/ou d'une puissance d'accélération du rotor, dans lequel de préférence la puissance aérodynamique (322) est la somme de la puissance électrique (320), de la puissance de perte et de la puissance d'accélération.

3. Procédé selon la revendication 2, dans lequel la puissance de perte est obtenue à partir de la somme d'une puissance de perte pouvant être mesurée et d'une puissance de perte estimée, dans lequel de préférence la puissance de perte estimée est déterminée par une multiplication d'un paramètre d'évaluation à la puissance électrique (320) et/ou dans lequel la puissance d'accélération est déterminée à partir d'un couple d'inertie du rotor, d'une vitesse angulaire et/ou d'une accélération angulaire, dans lequel de préférence la puissance d'accélération est déterminée par une multiplication du couple d'inertie du rotor à la vitesse angulaire et/ou à l'accélération angulaire.

4. Procédé selon l'une quelconque des revendications précédentes, dans lequel la valeur de consigne d'angle de pas (312) est obtenue à partir d'un gradient d'ajustement, dans lequel le gradient d'ajustement est obtenu à partir de l'angle de pas (324) et de la puissance aérodynamique (322).

5. Procédé selon l'une quelconque des revendications précédentes, dans lequel le facteur de puissance aérodynamique est un angle de pale supplémentaire dépendant de la puissance.

6. Procédé selon l'une quelconque des revendications précédentes, dans lequel un angle de pas minimal est pris en compte lors de la détermination de la valeur de consigne d'angle de pas (312), dans lequel de préférence l'angle de pas minimal et le facteur de puissance aérodynamique, en particulier l'angle de pale supplémentaire en fonction de la puissance sont pris en compte, dans lequel en outre de préférence l'angle de pas minimal et le facteur de puissance aérodynamique, en particulier l'angle de pale supplémentaire dépendant de la puissance, sont ajoutés les uns aux autres pour déterminer la valeur de consigne d'angle de pas (312).

7. Procédé selon l'une quelconque des revendications précédentes, dans lequel la fonction par endroits linéaire présente une première section, une deuxième section et de préférence une troisième section, dans lequel

   - la première section est définie pour une puissance aérodynamique (322), qui est inférieure à une première valeur de seuil de puissance, dans lequel la valeur de consigne d'angle de pas (312) correspond dans la première section sensiblement à l'angle de pas minimal, et/ou
   - la deuxième section est définie pour une puissance aérodynamique (322) qui est supérieure ou égale à la première valeur de seuil de puissance et est inférieure à une deuxième valeur de seuil de puissance, dans lequel la valeur de consigne d'angle de pas (312) est dans la deuxième section une somme de l'angle de pas minimal et d'un premier facteur de puissance aérodynamique, dans lequel de préférence le premier facteur de puissance aérodynamique est déterminé en fonction d'un premier gradient d'ajustement et/ou de la puissance aérodynamique (322) et/ou de la première valeur de seuil de puissance, et/ou
   - la troisième section est définie pour une puissance aérodynamique (322) qui est supérieure ou égale à la deuxième valeur de seuil de puissance, dans lequel la valeur de consigne d'angle de pas (312) est dans la troisième section une somme de l'angle de pas minimal et d'un deuxième facteur de puissance aérodynamique, dans lequel de préférence le deuxième facteur de puissance aérodynamique est déterminé en fonction d'un deuxième gradient d'ajustement et/ou de la puissance aérodynamique (322) et/ou de la deuxième valeur de seuil de puissance, et/ou du premier gradient d'ajustement, et/ou d'une différence de la deuxième valeur de seuil de puissance et de la première valeur de seuil de puissance.

8. Procédé selon l'une quelconque des revendications précédentes, dans lequel la valeur de consigne d'angle de pas (312) est déterminée avec la fonction de commande par endroits linéaire suivante :

$$
\alpha = \alpha_{min} + \left\{ \begin{array}{c} 0, \text{lorsque} P_{aero} < P_{min,1}, \\ \frac{\partial \alpha}{\partial P_1} * (P_{aero} - P_{min,1}), \text{lorsque} P_{min,1} \leq P_{aero} < P_{min,2}, \\ \frac{\partial \alpha}{\partial P_1} * (P_{min,2} - P_{min,1}) + \frac{\partial \alpha}{\partial P_2} * (P_{aero} - P_{min,2}), \text{lorsque} P_{min,2} \leq P_{aero} \end{array} \right\},
$$

dans lequel $\alpha$ est la valeur de consigne d'angle de pas (312), $\alpha_{min}$ est l'angle de pas minimal, $P_{aero}$ est la puissance aérodynamique (322), $P_{min,1}$ est la première valeur de seuil de puissance, $P_{min,2}$ est la deuxième valeur de seuil de puissance, $\frac{\partial \alpha}{\partial P_1}$ est un premier gradient d'ajustement et $\frac{\partial \alpha}{\partial P_2}$ est un deuxième gradient d'ajustement.

9. Procédé selon l'une quelconque des revendications précédentes, dans lequel au moins un signal, en particulier le signal caractérisant l'accélération angulaire, est filtré.

10. Procédé selon l'une quelconque des revendications précédentes, dans lequel le réglage de l'angle de pas (324) est effectué alors selon la valeur de consigne d'angle de pas (312) déterminée seulement lorsque la différence de la valeur de consigne d'angle de pas (312) déterminée et une valeur d'angle de pas réglée est supérieure à un angle de réglage minimal.

11. Procédé selon l'une quelconque des revendications précédentes, dans lequel la détermination de la valeur de consigne d'angle de pas (312) est effectuée en fonction de la puissance aérodynamique (322) dans une plage supérieure de charges partielles, dans lequel la plage supérieure de charges partielles se situe entre une plage de pleines charges et une plage inférieure de charges partielles.

12. Dispositif de commande (118) pour régler un angle de pas (324) d'une pale de rotor (108) pour un rotor d'une éolienne, qui est mis au point pour déterminer, en fonction d'une puissance aérodynamique (322) du rotor, une valeur de consigne d'angle de pas (312) et pour piloter un entraînement de pas (116) destiné à régler l'angle de pas (324) de la pale de rotor (108) de telle manière que l'angle de pas (324) est réglé au moyen de l'entraînement de pas (116) selon la valeur de consigne d'angle de pas (312) déterminée,
**caractérisé en ce que**
la détermination de la valeur de consigne d'angle de pas (312) est effectuée sur la base d'un facteur de puissance aérodynamique reproduit dans une fonction de commande par endroits linéaire, dans lequel des sections de la fonction de commande par endroits linéaire sont définies par la puissance aérodynamique (322), dans lequel la valeur de consigne d'angle de pas (312) est obtenue de préférence à partir d'un gradient d'ajustement, dans lequel le gradient d'ajustement est obtenu à partir d'un angle de pas (324) et de la puissance aérodynamique (322).

13. Dispositif de commande (118) selon la revendication 12, qui est couplé par une technique de signalisation à un entraînement de pas pour ajuster un angle de pas réglé de la pale de rotor (108) et dans lequel le dispositif de commande (118) fournit la valeur de consigne d'angle de pas (312) à l'entraînement de pas.

14. Dispositif de commande (118) selon l'une quelconque des revendications 12 ou 13, comprenant une structure de régulation, qui est mise au point pour réguler l'angle de pas (324) sur la base de la valeur de consigne d'angle de pas (312), dans lequel la structure de régulation présente au moins une première unité (310) pour définir la puissance aérodynamique et une deuxième unité pour déterminer la valeur de consigne d'angle de pas en fonction de la puissance aérodynamique.

15. Eolienne (100) avec un rotor (106), qui présente une pale de rotor (108) à pas ajustable, dans laquelle un angle de pas (324) de la pale de rotor (108) peut être réglé avec un entraînement de pas (116),

- dans laquelle l'éolienne (100) est mise au point pour exécuter un procédé selon l'une quelconque des revendications 1 - 11, et/ou
- comprenant un dispositif de commande (118) selon l'une quelconque des revendications 12-14, dans lequel le dispositif de commande (118) est couplé par une technique de signalisation à l'entraînement de pas (116) et est mis au point pour fournir à l'entraînement de pas une valeur de consigne d'angle de pas (312) déterminée en fonction d'une puissance aérodynamique (322), dans lequel l'entraînement de pas règle l'angle de pas sur la base de la valeur de consigne d'angle de pas (312).

**Fig. 1**

Fig. 2

Fig. 3

Fig. 4

Fig. 5

Fig. 6

EP 3 839 249 B1

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 3109461 A1

**In der Beschreibung aufgeführte Nicht-Patentliteratur**

• **E. MULJADI et al.** Pitch-Controlled Variable-Speed Wind Turbine Generation. *IEEE Transactions on Industry Applications,* vol. 37 (1